# EUROPÄISCHE PATENTSCHRIFT

(11) **EP 2 142 762 B1**
(45) Veröffentlichungstag und Bekanntmachung des Hinweises auf die Patenterteilung: **29.05.2013**
(21) Anmeldenummer: 08736462.6
(22) Anmeldetag: 22.04.2008
(51) Int. Cl.: F01D 11/04, F16J 15/32

(54) **WELLENDICHTUNG FÜR DAMPFTURBINEN**
SHAFT SEAL FOR STEAM TURBINES
JOINT D'ARBRE POUR TURBINES À VAPEUR

(30) Priorität: 09.05.2007 DE 102007021742
(43) Veröffentlichungstag der Anmeldung: 13.01.2010
(73) Patentinhaber: Siemens Aktiengesellschaft, 80333 München (DE)
(72) Erfinder: GOBRECHT, Edwin, 40885 Ratingen (DE); HAMMANN, Achim, 46117 Oberhausen (DE); KNUDSEN, Dirk, 45964 Gladbeck (DE); PETERS, Karsten, 46485 Wesel (DE); WALKENHORST, Jan, 45479 Mülheim An der Ruhr (DE)
(86) Internationale Anmeldenummer: PCT/EP2008/054868
(87) Internationale Veröffentlichungsnummer: WO 2008/138713

(56) Entgegenhaltungen:
- EP-A- 1 696 155
- US-A- 5 941 506
- US-A1- 2005 098 958

## Beschreibung

Die vorliegende Erfindung betrifft eine Wellendichtung für Dampfturbinen, bei welcher der Wellendichtungssperrdampf mit geringem Überdruck zugeführt wird.

Wellendichtungen von Dampfturbinen werden mit Sperrdampf ausgeführt. Der Sperrdampf wird der Wellendichtung mit geringem Überdruck zugeführt. Im Betrieb wird das Sperrdampfsystem mit Dampf aus der Dampfturbine mit geeignetem Druck und Temperatur versorgt. Beim Evakuieren vor dem Start der Maschine und bei kleiner Last wird der Sperrdampf aus einem Hilfsdampfsystem entnommen.

Das Sperrdampfsystem besteht aus einer Sperrdampfkammer, die unter leichtem Überdruck steht und einer Wrasendampfkammer, die gegenüber der Atmosphäre unter leichtem Unterdruck gehalten wird. In der Wrasendampfkammer mischen sich die eindringende Luft und ein Teilmengenstrom des Dampfes aus der Sperrdampfkammer. Dieser so genannte Wrasen wird durch ein Gebläse abgesaugt. Der hierin enthaltene Dampf wird in einem Kondensator wieder verflüssigt und dem Wasser-Dampf-System zugeführt. Dazu ist ein aufwändiger Rohrleitungsbau für die Wrasenleitungen einschließlich Absaugventilatoren, Ventilen und Wrasendampfkondensator notwendig (siehe US-A-5941506).

Aufgabe der vorliegenden Erfindung ist es, eine Wellendichtung der eingangs genannten Art anzugeben, bei welcher keine komplexen Zusatzeinrichtungen notwendig sind, um den Wrasen wieder zu verflüssigen.

Diese Aufgabe wird für die eingangs genannte Wellendichtung dadurch gelöst, dass zwischen der Sperrdampfkammer und der Umgebungsluft eine Kondensationskammer vorgesehen ist, welche sowohl zur Umgebungsluft als auch zur Sperrdampfkammer mit Bürstendichtungen abgedichtet ist, wobei die Kondensationskammer so ausgeführt ist, dass die in ihrem Inneren entstehende Wärme nach außen abführt wird.

Durch die Kondensation direkt an der Turbine entfällt der gesamte Rohrleitungsbau für die Wrasenleitungen, einschließlich Absaugventilator, Ventile und Wrasendampfkondensator. Es ergeben sich also bei der Wellendichtung gemäß der Erfindung erhebliche Einsparungen.

Vorteilhafte Weiterbildungen der vorliegenden Erfindung ergeben sich aus den Unteransprüchen sowie aus der Beschreibung eines Ausführungsbeispiels anhand der beigefügten Zeichnung.

Nachstehend wird anhand der beigefügten Zeichnung der prinzipielle Aufbau einer aktuellen Ausführung einer Wellendichtung sowie der prinzipielle Aufbau einer Wellendichtung gemäß der Erfindung dargestellt.

Es zeigen:
- Figur 1: den prinzipiellen Aufbau einer bekannten Wellendichtung, und
- Figur 2: den prinzipiellen Aufbau einer erfindungsgemäßen Wellendichtung.

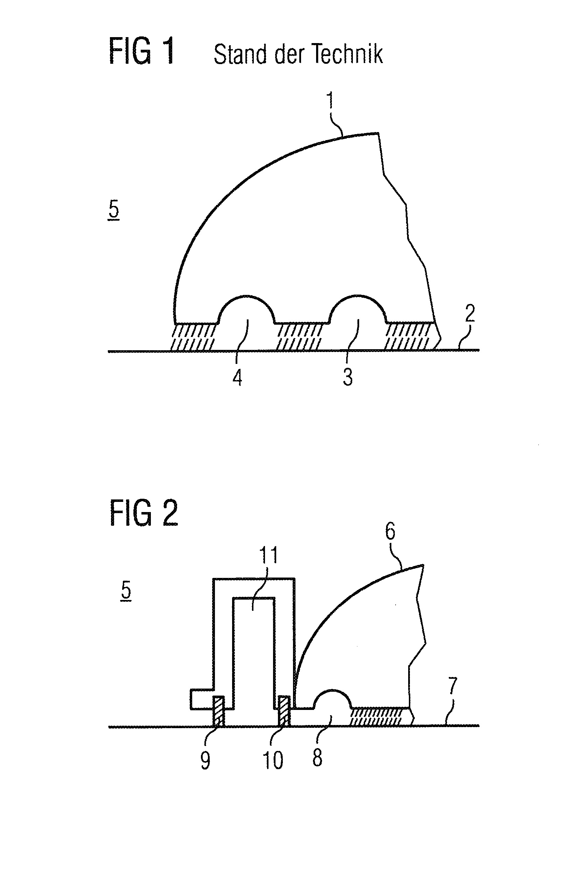

In Figur 1, in welcher der Stand der Technik dargestellt ist, ist mit 1 das Turbinengehäuse und mit 2 die Welle gekennzeichnet. Die hier dargestellte Wellendichtung besitzt eine Sperrdampfkammer 3 und eine Wrasendampfkammer 4. Zwischen der Wrasendampfkammer 4 und der Umgebungsluft 5 sowie zwischen der Wrasendampfkammer 4 und der Sperrdampfkammer 3 sowie zwischen der Sperrdampfkammer 3 und dem Inneren der Turbine befinden sich Dichtungen, zum Beispiel Labyrinth-Dichtungen.

Auf die Wrasenleitungen und die damit zusammenhängenden Ventile und den Wrasendampfkondensator soll hier nicht näher eingegangen werden, da diese dem Fachmann bekannt sind und diese auch nicht wesentlich für den eigentlichen Erfindungsgedanken sind.

In Figur 2 ist prinzipiell eine Wellendichtung gemäß der vorliegenden Erfindung dargestellt. Mit 6 ist das Turbinengehäuse gekennzeichnet und 7 kennzeichnet die Welle. Die erfindungsgemäße Wellendichtung verfügt über eine Sperrdampfkammer 8, die mit einer Labyrinthdichtung gegenüber dem Turbineninneren abgedichtet ist.

Zwischen der Umgebungsluft 5 und der Sperrdampfkammer 8 befindet sich nun eine Kondensationskammer 11, welche sowohl gegenüber der Umgebungsluft 5 als auch gegenüber der Sperrdampfkammer 8 mit Bürstendichtungen 9 und 10 abgedichtet ist. Die Kondensationskammer 11 ist dabei so ausgeführt, dass sie die in ihrem Inneren entstehende Wärme nach außen abführt, das heißt, sie ist nicht in die eigentliche Dampfturbine integriert.

Durch den Einsatz moderner Dichtungstechnologien, wie zum Beispiel den Einsatz von Bürstendichtungen, fällt nur noch ein Bruchteil der bisherigen Leckdampfmenge an. Diese kann dann durch die Kondensationskammer 11 direkt an der Dampfturbine kondensiert werden.

Durch die Kondensation direkt an der Dampfturbine entfällt der gesamte Rohrleitungsbau für die Wrasenleitungen sowie der Wrasendampfkondensator, die Ventile und das Absauggebläse.

## Patentansprüche

1. Wellendichtung für Dampfturbinen, bei welcher der Wellendichtungssperrdampf mit geringem Überdruck zugeführt wird,
**dadurch gekennzeichnet,**
**dass** zwischen der Sperrdampfkammer und der Umgebungsluft eine Kondensationskammer, welche sowohl zur Umgebungsluft als auch zur Sperrdampfkammer mit Bürstendichtungen abgedichtet ist, vorgesehen ist, wobei die Kondensationskammer so ausgeführt ist, dass die in ihrem Inneren entstehende Wärme nach außen abführt wird.

2. Wellendichtung nach Anspruch 1,
**dadurch gekennzeichnet,**
**dass** die Kondensationskammer angeflanscht ist und dass zwischen Kondensationskammer und Dampfturbine eine Isolierschicht angeordnet ist.

3. Wellendichtung nach Anspruch 1,
**dadurch gekennzeichnet,**
**dass** die Kondensationskammer angegossen ist und gegenüber der Dampfturbine isoliert ist.

## Claims

1. Shaft seal for steam turbines, in which the shaft-seal sealing chamber is fed with a slight overpressure,
**characterized in that**
a condensation chamber is provided between the sealing-steam chamber and the ambient air and is sealed by brush seals both in relation to the surrounding air and in relation to the sealing-steam chamber, wherein the condensation chamber is constructed so that the heat which develops therein is discharged to the outside.

2. Shaft seal according to Claim 1,
**characterized in that** the condensation chamber is flanged on, and **in that** an insulating layer is arranged between condensation chamber and steam turbine.

3. Shaft seal according to Claim 1,
**characterized in that** the condensation chamber is cast on and is insulated in relation to the steam turbine.

## Revendications

1. Joint d'arbre pour des turbines à vapeur, dans lequel la vapeur de barrage du joint d'arbre est apportée avec une surpression petite,
**caractérisé**
**en ce qu'**entre la chambre de vapeur de barrage et l'air ambiant est prévue une chambre de condensation, qui est rendue étanche par des garnitures à brosse, tant vis-à-vis de l'air ambiant qu'également vis-à-vis de la chambre de vapeur de barrage, la chambre de condensation étant telle qu'elle évacue à l'extérieur la chaleur créée en son intérieur.

2. Joint d'arbre suivant la revendication 1,
**caractérisé**
**en ce que** la chambre de condensation est bridée et en ce qu'une couche isolante est disposée entre la chambre de condensation et la turbine à vapeur.

3. Joint d'arbre suivant la revendication 1,
**caractérisé**
**en ce que** la chambre de condensation est coulée et est isolée par rapport à la turbine à vapeur.
